# EUROPÄISCHE PATENTSCHRIFT

(11) **EP 3 458 362 B1**
(45) Veröffentlichungstag und Bekanntmachung des Hinweises auf die Patenterteilung: **15.09.2021**
(21) Anmeldenummer: 17725218.6
(22) Anmeldetag: 17.05.2017
(51) Int. Cl.: B64D 11/06, B60N 2/06

(54) **FLEXIBLES SCHIENENSYSTEM ZUM BEFESTIGEN VON OBJEKTEN AN EINEM FUSSBODEN IN EINER KABINE EINES TRANSPORTMITTELS**
FLEXIBLE RAIL SYSTEM FOR SECURING OBJECTS TO A FLOOR IN A CABIN OF A TRANSPORT MEANS
SYSTÈME FLEXIBLE DE RAIL SERVANT À FIXER DES OBJETS AU PLANCHER D'UNE CABINE D'UN MOYEN DE TRANSPORT

(30) Priorität: 19.05.2016 DE 102016109219
(43) Veröffentlichungstag der Anmeldung: 27.03.2019
(73) Patentinhaber: Airbus Operations GmbH, 21129 Hamburg (DE)
(72) Erfinder: GROSS, Claus-Peter, 21129 Hamburg (DE)
(74) Vertreter: LKGLOBAL Lorenz & Kopf PartG mbB Patentanwälte
(86) Internationale Anmeldenummer: PCT/EP2017/061849
(87) Internationale Veröffentlichungsnummer: WO 2017/198716

(56) Entgegenhaltungen:
- EP-A2- 1 593 548
- WO-A1-2011/134640
- DE-A1-102013 103 662

## Beschreibung

### TECHNISCHES GEBIET

Die Erfindung betrifft ein Schienensystem zum Befestigen von Objekten an einem Fußboden in einer Kabine eines Transportmittels, ein Flugzeug, aufweisend eine Kabine mit einem Fußboden und einem darin installierten derartigen Schienensystem sowie ein Verfahren zum Befestigen eines Objekts an einem Fußboden in einer Kabine eines Flugzeugs.

### HINTERGRUND DER ERFINDUNG

Üblicherweise werden in Fahrzeugen, die dem Transport von Passagieren dienen, Passagiersitze und andere Einrichtungen an Fußbodenschienen befestigt, welche in einem bestimmten Raster angeordnete Befestigungsmittel besitzen. Durch das Raster können unterschiedliche Befestigungspositionen an den Fußbodenschienen realisiert werden. Eine Befestigung des betreffenden Objekts an einer gewünschten Position erfolgt üblicherweise durch eine Arretiereinrichtung, welche eine form- und/oder kraftschlüssige Arretierung mit Befestigungsmitteln der Fußbodenschiene durchführt.

Zudem ist bekannt, insbesondere in Flugzeugen je nach Wunsch oder temporärer Anforderung einen Abstand zwischen in einer Längsrichtung aufeinanderfolgenden Sitzen zu bestimmen und gegebenenfalls gelegentlich oder regelmäßig zu ändern.

Dazu werden die Arretiereinrichtungen betreffender Sitze gelöst, anschließend werden die Sitze entlang der Fußbodenschiene verschoben und die Arretiereinrichtungen werden wieder arretiert. Das Ändern des Abstands insbesondere zwischen zwei hintereinander angeordneten Passagiersitzen kann die Bestuhlungsklasse des betreffenden Abschnitts in der Passagierkabine ändern.

DE 10 2009 004 987 B4 zeigt einen verschiebbaren Sitz für ein Transportmittel, mit einem Sitzgestell zum verschiebbaren Anbringen an einer Trägerstruktur des Transportmittels, wobei der Sitz derart ausgeführt ist, dass zwei im Transportmittel hintereinander angeordnete Sitze in einem zusammen- und zumindest teilweise ineinandergeschobenen Lagerzustand eine geringere gemeinsame Grundfläche aufweisen als in einem auseinandergeschobenen Benutzungszustand.

DE 10 2013 103 662 A1 zeigt eine Haltevorrichtung zum Befestigen von Passagiersitzen in einem Transportmittel, die ein Sitzbeinfixierelement, ein Gleitelement und ein Schienenelement aufweist.

### ZUSAMMENFASSUNG DER ERFINDUNG

Die Integration verschiebbar angeordneter Sitze oder anderer Einrichtungen in einer Kabine eines Fahrzeugs kann durch Verwendung einer Gleitschiene verbessert werden, entlang der die Sitze verschiebbar und befestigbar sind. Es ist eine Aufgabe der Erfindung, ein Schienensystem zum Befestigen von Objekten an einem Fußboden in einer Kabine eines Transportmittels vorzuschlagen, das eine möglichst einfache Anpassung an unterschiedliche Positionen und eine rasche Umkonfigurierung eines Kabinenlayouts eines Transportmittels erlaubt und gleichzeitig eine einfache Wartung oder Modifikation von Objekten ermöglicht.

Die Aufgabe wird durch ein Schienensystem mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird ein Schienensystem zum Befestigen von Objekten an einem Fußboden in einer Kabine eines Transportmittels vorgeschlagen, das Schienensystem aufweisend mindestens eine in oder an dem Fußboden integrierbare Fußbodenschiene, eine Vielzahl erster länglicher Bewegungsschienenelemente, eine Vielzahl zweiter länglicher Bewegungsschienenelemente, eine Vielzahl von Haltemitteln zum Haltern von ersten und zweiten Bewegungsschienenelementen an der Fußbodenschiene und eine Vielzahl von auf den ersten und zweiten Bewegungsschienenelementen gleitend lagerbaren Läufern. Die ersten und zweiten Bewegungsschienenelemente weisen senkrecht zu ihrer Haupterstreckungsachse einen Schienenprofilquerschnitt auf, der mindestens eine lateral nach außen gerichtete Hinterschneidung besitzt. Die ersten und zweiten Bewegungsschienenelemente weisen jeweils zwei einander gegenüberliegende Endflächen auf, die bündig mit Endflächen anderer erster oder zweiter Bewegungsschienenelemente in Flächenkontakt bringbar sind, so dass mindestens eine durchgehende Bewegungsschiene mit gleichbleibendem Schienenprofilquerschnitt entsteht. Die Läufer weisen zum gleitenden Lagern eine mit dem Schienenprofilquerschnitt korrespondierend geformte Ausnehmung auf. Die Summe der Längen eines ersten länglichen Bewegungsschienenelements und eines zweiten Bewegungsschienenelements liegt in einem Bereich von 26 Zoll (ungefähr 66 cm) bis 100 Zoll (ungefähr 254 cm). Dabei unterschreitet die Länge eines zweiten Bewegungsschienenelements die Länge eines ersten Bewegungsschienenelements.

Mit dem Schienensystem kann folglich eine Bewegungsschiene bereitgestellt werden, die auf einem Fußboden in einer Kabine eines Transportmittels positionierbar ist. Hierzu wird eine abwechselnde Folge erster und zweiter Bewegungsschienenelemente über mehrere Haltemittel an einer Fußbodenschiene befestigt, so dass die daraus zusammengesetzte Bewegungsschiene eine Haupterstreckungsrichtung besitzt, welche der Haupterstreckungsrichtung der Fußbodenschiene entspricht. Diese ist insbesondere etwa parallel zu einer Längsachse der Kabine des betreffenden Transportmittels gemessen.

Die Bewegungsschienenelemente sind als längliche, separat ausgeführte Teilabschnitte einer Bewegungsschiene aufzufassen, welche sich praktisch über unbegrenzte Längen aneinander reihen und damit jegliche erforderlichen Längen in einer Kabine des Transportmittels realisieren lassen. Die Bewegungsschiene ist folglich segmentiert. Die Bewegungsschiene ermöglicht eine gleitende Bewegung von daran angeordneten Läufern entlang der Erstreckungsrichtung der Bewegungsschiene und folglich entlang sämtlicher Bewegungsschienenelemente. Der Ausdruck "mindestens" bezieht sich darauf, dass auch mehrere Bewegungsschienenelemente parallel zueinander angeordnet sein können oder Gruppen von Bewegungsschienen in unterschiedlichen Kabinenbereichen des Transportmittels angeordnet sein können.

Die Haltemittel dienen zur Befestigung der Bewegungsschienenelemente an der Fußbodenschiene und sind derart auszuwählen, dass eine vollständige Einleitung der entstehenden Lasten aufgrund von Massen- und Trägheitskräften in die Fußbodenschiene und folglich in die Struktur des Transportmittels gewährleistet wird. Abhängig von der Ausführung der Haltemittel können die Bewegungsschienenelemente eine Länge aufweisen, die durch ein Längenraster bestimmt wird, das mit einem Raster der Fußbodenschiene korrespondiert.

Eine Fußbodenschiene im Sinne der Erfindung kann einer beispielsweise im Flugzeugbau üblichen "Douglas-Rail" entsprechen, die eine längliche Erstreckung aufweist und etwa aus einer flachen, bandartigen Basis besteht, auf der sich zwei voneinander beabstandete und durch einen Schlitz voneinander separierte Auskragungen befinden, die mit der Basis einen flachen Hohlraum einschließen. Der Schlitz ist weiterhin von mit einem vorbestimmten Abstand, der üblicherweise 1 Zoll beträgt, zu einander entlang der Fußbodenschiene verteilten Rasteröffnungen durchsetzt, die sich durch die Auskragungen erstrecken. Üblicherweise dienen die Rasteröffnungen dazu, pilzartige Arretierelemente von einem auf den Auskragungen angeordneten Haltemittel in den Hohlraum einzuführen, zwischen zwei benachbarte Rasteröffnungen in einen Verjüngungsbereich mit geringem lokalen Abstand der beiden Auskragungen zu verschieben und dann durch eine Krafteinwirkung mit den Auskragungen zu verklemmen. Das Längenraster der Bewegungsschienenelemente kann an ein solches Raster in der Fußbodenschiene angepasst sein. Die Fußbodenschiene ist mit einer tragenden Struktur des Transportmittels mechanisch verbunden, so dass Lasten von der Fußbodenschiene in die Struktur des Transportmittels einleitbar ist.

Die Fußbodenschiene kann alternativ dazu auch lediglich eine mit der Struktur des Transportmittels verbundene längliche Komponente sein, die lediglich als Aufnahme einer Bewegungsschiene dient. Diese könnte auf, in oder unterhalb des Fußbodens angeordnet sein und Haltepunkte bereitstellen, an denen die Haltemittel des Bewegungsschienensystems befestigbar sind. Eine solche längliche Komponente kann auch selbst ein Strukturbauteil sein, dass sich unterhalb des Fußbodens befindet, sich in den Fußboden hinein erstreckt und/oder vom Fußboden aus durch entsprechende Befestigungsmittel erreichbar ist.

Die Bewegungsschienenelemente besitzen einen Profilquerschnitt senkrecht zu ihrer Haupterstreckungsachse und besitzen eine Basisfläche, die auf eine Oberseite der Fußbodenschiene auflegbar ist. Der Profilquerschnitt erstreckt sich senkrecht zu der Basisfläche und damit der Oberseite der Fußbodenschiene im aufgelegten bzw. montierten Zustand der Bewegungsschiene. Eine Hinterschneidung in dem Profilquerschnitt, die durch seitliche Einschnürungen, Ausnehmungen, Verjüngungen oder dergleichen realisiert ist, erlaubt, in einer von der Fußbodenschiene abgewandten Richtung einen Formschluss zwischen einem Läufer und dem Bewegungsschienenelement zu generieren, der das Abheben des Läufers von dem Bewegungsschienenelement verhindert und die Bewegung des Läufers ausschließlich entlang der Haupterstreckungsrichtung beschränkt. Der Profilquerschnitt kann weiterhin entlang der Haupterstreckungsrichtung des Bewegungsschienenelements gleichbleibend ausgeführt sein, was die Herstellung und Montage der Bewegungsschienenelemente erleichtert. Die Haltekräfte zwischen dem Läufer und den Bewegungsschienenelementen sind folglich ebenfalls symmetrisch, so dass hieraus eine Art Schwalbenschwanzführung resultieren kann und eine bei der Montage durchzuführende korrekte Ausrichtung der Bewegungsschienenelemente sowie der Läufer nicht notwendig ist.

Ein Läufer dient zur lasttragenden Aufnahme eines Abschnitts eines an der Sitzschiene zu befestigenden Objekts und kann eine Arretiereinrichtung aufweisen, die an der Sitzschiene arretierbar ist. Beispielsweise kann ein Gelenk, ein Flansch oder eine Öffnung an einem Sitzgestell, welches Passagiersitze oder dergleichen ausgeführt ist, mit einem Läufer verbunden werden. Dadurch ist das Objekt entlang der Bewegungsschiene variabel positionierbar und kann an gewünschter Stelle, abhängig von der Detailgestaltung der Bewegungsschiene, arretiert werden. Insbesondere bezieht sich die Ausgestaltung des Schienensystems auf die positionsvariable Integration von Passagiersitzen in einer Kabine.

Die Summe der Längen der Bewegungsschienenelemente ist derart angepasst, dass ein üblicher Sitzabstand (auch als "seat pitch" bekannt), und/oder ein doppelter und/oder ein dreifacher üblicher Sitzabstand durch eine Kombination eines ersten und eines zweiten Bewegungsschienenelements abgedeckt wird. Zur Gewährleistung von Sicherheitsvorschriften sind etwa Sitzabstände unterhalb von 26 Zoll nicht zulässig, während Sitzabstände von 34 Zoll bis 39 Zoll für eine enge Bestuhlung nicht unüblich sind. In gehobenen Bestuhlungsklassen sind Sitzabstände oberhalb von 92 Zoll indes praktisch unbekannt.

Ziel der Kombination aus längeren ersten Bewegungsschienenelementen und kürzeren zweiten Bewegungsschienenelementen liegt darin, dass insbesondere für jede Passagiersitzreihe und/oder jede zweite Passagiersitzreihe und/oder jede dritte Passagiersitzreihe ein zweites Bewegungsschienenelement vorgesehen ist, das bedarfsweise leicht aus der zusammengesetzten Bewegungsschiene herausgelöst werden kann, um sehr leicht einen auf der Bewegungsschiene gleitend gelagerten Läufer aus der Gleitschiene zu entnehmen, ohne den Läufer bis zu einem Ende der Bewegungsschiene in einem entsprechenden Kabinenabschnitt verschieben zu müssen. Gleichermaßen erlaubt die Konzeption des Schienensystems das bedarfsweise Einfügen einer Passagiersitzreihe durch kurzzeitige Entnahme eines zweiten Bewegungsschienenelements.

Insgesamt erlaubt das erfindungsgemäße Bewegungsschienensystem eine besonders vorteilhafte Befestigung von Objekten an einem Fußboden in einer Kabine eines Transportmittels, bei dem die Objekte leicht entlang einer Haupterstreckungsrichtung bewegbar sind und bedarfsweise über daran angeordnete Läufer aus einer Bewegungsschiene herausgenommen oder darin eingesetzt werden können. Ein weitläufiges Verschieben des betreffenden Objekts und/oder von anderen Objekten zum Erreichen eines Endes einer Bewegungsschiene ist nicht notwendig.

Neben einer vereinfachten Wartung bzw. einem leichten Austausch von Bewegungsschienenelementen an sich ist damit auch sehr leicht möglich, bei Umkonfigurierung des Layouts in der Kabine durch Vergrößern von Sitzabständen überzählige Sitze bzw. Sitzreihen oder andere an der Bewegungsschiene befestigte Objekte zu entfernen oder bei Verringerung von Sitzabständen zusätzliche Sitze bzw. Sitzreihen einzufügen.

In einer besonders vorteilhaften Ausführungsform ist die Summe der Längen eines ersten länglichen Bewegungsschienenelements und eines zweiten Bewegungsschienenelements in einem Bereich von 26 Zoll (ungefähr 76 cm) bis 40 Zoll (ungefähr 102 cm). Damit kann ein üblicher Sitzabstand für eine engbestuhlte Klasse abgebildet werden, für den jeweils ein zweites Bewegungsschienenelement vorhanden ist.

In diesem Zusammenhang sei erwähnt, dass zur Anpassung an einen odere mehrere bestimmte Sitzabstände auch das bedarfsweise Kürzen eines ersten und/oder zweiten Bewegungsschienenelements möglich wäre. Alternativ oder zusätzlich dazu wäre zudem denkbar, dass die Anpassung an gewünschte Sitzabstände durch Konzeption der Einzellängen der ersten und/oder zweiten Bewegungsschienenelemente durchführbar wäre. Weist die Fußbodenschiene etwa ein Raster von einem Zoll auf, könnten zweite Bewegungsschienenelemente vorgesehen sein, die mit drei, vier oder fünf Rasterabständen korrespondieren, während die Länge des ersten Bewegungsschienenelements stets etwa mit 32 Rasterabständen korrespondieren kann. Insgesamt würden sich hieraus Längen von vier, fünf oder sechs Zoll für das zweite Bewegungsschienenelement ergeben, sowie von 33 Zoll für das erste Bewegungsschienenelement, also insgesamt eine mögliche Längensumme von 37 bis 39 Zoll. Selbstverständlich können auch zusätzliche Längen für das erste und/oder das zweite Bewegungsschienenelement vorgesehen sein.

Die Länge eines zweiten Bewegungsschienenelements überschreitet bevorzugt die Länge der Ausnehmung eines Läufers. Zum Entnehmen des Läufers aus der Bewegungsschiene muss die Ausnehmung vollständig außer Eingriff der Bewegungsschiene entnommen werden. Dazu wird, wie vorangehend ausgeführt, ein zweites Bewegungsschienenelement aus der geschlossenen Bewegungsschiene entnommen. Der Läufer wird anschließend entlang der Bewegungsschiene an die Stelle des entnommenen zweiten Bewegungsschienenelements verschoben. Erstreckt sich das zweite Bewegungsschienenelement über eine größere Strecke als die Ausnehmung des Läufers, greift der Läufer folglich nicht mehr in die Bewegungsschiene ein und kann von dieser entfernt werden. Um ein verkantungsfreies Herausheben zu gewährleisten, sollte die Lücke innerhalb der Bewegungsschiene ausreichend groß sein.

Ist ein Passagiersitz oder ein anderes Objekt an diesem Läufer befestigt, kann die entsprechende, mit dem Läufer verbundene Einrichtung des Objekts von der Bewegungsschiene gelöst werden. Weist das Objekt mehrere entlang der Bewegungsschiene verteilte Läufer auf, sollte deren Befestigung an dem Objekt derart beweglich sein, dass ein aus der Bewegungsschiene gelöster erster Läufer das Nachrutschen eines zweiten Läufers an der Stelle des herausgenommenen zweiten Bewegungsschienenelements nicht behindert. Die Länge des zweiten Bewegungsschienenelements muss nur um einen relativ geringen Betrag die Ausnehmung des Läufers überschreiten, beispielsweise einen oder wenige Zentimeter, dass ein Verkanten des Läufers in der entstandenen Lücke ausgeschlossen wird. Hierfür könnte unter anderem die Bauhöhe des Läufers bzw. der Bewegungsschiene ausschlaggebend sein. Die Längendifferenz zwischen dem zweiten Bewegungsschienenelement und der Ausnehmung des Läufers könnte auch in der Größenordnung der Bauhöhe liegen.

Es ist vorteilhaft, wenn die Länge eines zweiten Bewegungsschienenelements höchstens 20 cm (ungefähr 8 Zoll) beträgt. Ein zweites Bewegungsschienenelement mit einer derartigen Länge kann sehr leicht an einer freien Stelle einer Bewegungsschiene angeordnet werden, die sich beispielsweise zwischen einer Rückseite eines Passagiersitzes und einer Vorderseite eines dahinter befindlichen Passagiersitzes befindet. An dieser Stelle ist eine gute Zugänglichkeit gegeben, so dass zum Entnehmen des zweiten Bewegungsschienenelements kein vorheriges Verschieben eines Passagiersitzes zum Freigeben des zweiten Bewegungsschienenelements erforderlich ist. Werkzeug zum Lösen einer Verschraubung eines Haltemittels erfährt hier einen ausreichenden Bewegungsspielraum und das Lösen des zweiten Bewegungsschienenelements kann sehr ergonomisch durchgeführt werden. Besitzt das zweite Bewegungsschienenelement eine signifikant größere Länge, kann insbesondere bei einer engen Bestuhlung ein vorheriges Verschieben von Einbauten erforderlich sein.

In einer vorteilhaften Ausführungsform weisen die ersten und zweiten Bewegungsschienenelemente in einem Längsraster angeordnete Arretieröffnungen in einer von der Fußbodenschiene abgewandten Oberseite auf und mindestens einer der Läufer weist ein bewegbar an dem Läufer gelagertes und mit einer der Arretieröffnungen in Eingriff bringbares Arretiermittel auf. Da das zu befestigende Objekt an einem oder mehreren Läufern angeordnet ist, die wiederum entlang der Bewegungsschiene gleitend gelagert sind, muss zur Fixierung des Objekts an der Befestigungsschiene eine Arretierung durchgeführt werden. Durch Anordnen von Arretieröffnungen in einem Längsraster kann das Objekt folglich an einer beliebigen, durch das Längsraster vorgegebenen Position arretiert werden. Arretieröffnungen, die sich von einer von der Fußbodenschiene abgewandten Oberseite der Bewegungsschiene in Richtung der Fußbodenschiene erstrecken, erlauben etwa das Einführen von länglichen Arretiermitteln. Diese können an dem betreffenden Läufer entlang der Erstreckungsachse der Arretieröffnung gelagert sein. Es bietet sich an, durch eine Feder oder andere Mittel eine Vorspannung auf das Arretiermittel auszuüben, so dass das Arretiermittel stets in einer Arretieröffnung gehalten wird oder in eine solche einschnappt, wenn das Arretiermittel und die Arretieröffnung miteinander fluchten. Ein besonders einfaches Arretiermittel kann in Form eines Stifts oder Bolzens ausgeführt sein, der in einer korrespondierenden Bohrung in dem betreffenden Läufer geführt wird. Die Dimensionierung des Arretiermittels muss unter Berücksichtigung der zu erwartenden Lasten auf das zu befestigende Objekt erfolgen, welche sich insbesondere durch Zulassungsrichtlinien des Fahrzeugs und die Bauart des Objekts ergeben.

Die Fußbodenschiene kann eine Sitzschiene sein. Das Haltemittel kann ein längliches Adapterschienenelement sowie ein Arretierelement aufweisen, wobei das Adapterschienenelement in eine Öffnungskontur der Fußbodenschiene einführ- und dort arretierbar ist, sowie mindestens ein Schraubmittel zum Verschrauben der Bewegungsschienenelemente mit einem Adapterschienenelement erlauben. Damit kann eine herkömmliche Sitzschiene, beispielsweise eine vorangehend genannte "Douglas-Rail", als Fußbodenschiene eingesetzt werden und das erfindungsgemäße Schienensystem eignet sich auch zur Nachrüstung bereits bestehender Kabinen. Ein Austausch einer bestehenden Fußbodenschiene ist folglich nicht erforderlich und eine ideale Lasteinleitung in die mit einer Struktur des Transportmittels verbundene Fußbodenschiene wird gewährleistet.

Die Summe der Länge bis 100 Zoll könnte weiterhin der Verwendung eines zweiten Bewegungsschienenelements für etwa drei Sitzreihen in einer Economy Class gelten, so dass lediglich maximal zwei Sitzreihen verschoben werden müssen, um eine Sitzreihe zu tauschen oder zu ergänzen. Der zusätzliche Aufwand hinsichtlich der Integration eines zweiten Bewegungsschienenelements hält sich folglich in Grenzen, ebenso das Verschieben maximal zweier Sitzreihen.

In einer vorteilhaften Ausführungsform entspricht die Summe der Längen des ersten Bewegungsschienenelements und des zweiten Bewegungsschienenelements zwischen 26 Zoll und 40 Zoll, besonders bevorzugt zwischen 29 Zoll und 34 Zoll, was ungefähr dem Sitzabstand zweier Sitzreihen in einer Economy Class entspricht.

In einer vorteilhaften Ausführungsform weisen die ersten und zweiten Bewegungsschienenelemente zueinander symmetrisch ausgeformte Endflächen auf. Hierdurch sind die Bewegungsschienenelemente auch in unterschiedlichen Orientierungen verwendbar, ein "vorderes" und "hinteres" Ende muss bei der Montage nicht berücksichtigt werden. Symmetrische Endflächen können zur Gewährleistung der Flexibilität derart ausgestaltet sein, dass eine problemlose Entnahme eines zweiten Bewegungsschienenelements aus einer Bewegungsschiene möglich ist, ohne ein erstes Bewegungsschienenelement zu demontieren. Es bietet sich insbesondere an, entweder einfache, senkrechte Endflächen zu verwenden, oder Endflächen, welche an einer der Fußbodenschiene zugewandten Basisfläche eine größere Länge aufweisen als an einer der Fußbodenschiene abgewandten Oberseite. Alternativ oder zusätzlich hierzu kann auch die Basisfläche eine geringere Länge aufweisen als die von der Fußbodenschiene abgewandte Oberseite, so dass ein zweites Bewegungsschienenelement in die Lücke zwischen zwei ersten Bewegungsschienenelementen seitlich einschiebbar ist.

In einer besonders bevorzugten Ausführungsform weisen die ersten und zweiten Bewegungsschienenelemente senkrecht zu ihrer Erstreckungsrichtung verlaufende, plane Endflächen auf. Hierbei ist ein seitliches Einschieben und ein Abheben von der Fußbodenschiene eines zweiten Bewegungsschienenelements ohne Weiteres möglich.

Die Erfindung betrifft ferner ein Transportmittel, aufweisend eine Kabine mit einem Fußboden und einem darin installierten Schienensystem zum Befestigen von Objekten gemäß der vorangehenden Beschreibung. Die Objekte sind insbesondere Passagiersitze oder Passagiersitzreihen, die ein Sitzgestell mit daran angeordneten Sitz- und Rückenpolstern aufweisen. Ein Sitzgestell ist dabei als eine auf einem Kabinenfußboden befestigbare, hoch belastbare mechanische Rahmenkonstruktion zu verstehen, die primär zur Bereitstellung einer Basis für Passagiersitze dient und sowohl Sitzflächen als auch bevorzugt verschwenkbar an dem Sitzgestell lagerbare Rückenlehnen aufnehmen kann. In Verkehrsflugzeugen haben sich Sitzgestelle etabliert, die zwei, drei oder vier Sitzflächen aufnehmen können und in Sitzschienen befestigbar sind. Exemplarisch weist ein Sitzgestell zwei Gruppen aus je einem vorderen Sitzbein, einem hinteren Sitzfuß und einer dazwischen verlaufenden Diagonalstrebe auf, wobei jede Gruppe dieser Komponenten eine zu einem Kabinenfußboden vertikal verlaufende Fläche aufspannt. Die beiden Gruppen sind voneinander beabstandet und tragen gemeinsam ein vorderes und ein hinteres Tragrohr.

In einer vorteilhaften Ausführungsform ist das Transportmittel als Flugzeug ausgeführt. Dieses kann eine Kabine mit einer Reihe von Passagiersitzen bzw. Passagiersitzreihen aufweisen, deren rasche Umkonfigurierbarkeit durch das erfindungsgemäße Schienensystem zur Vergrößerung oder Verkleinerung von Sitzabständen begünstigt wird. Bei Erweiterung von Sitzabständen können Sitzreihen durch Entnahme von zweiten Bewegungsschienenelementen leicht aus der Kabine entfernt werden oder darin eingeführt werden.

Die Erfindung betrifft ferner ein Verfahren zum Einsetzen oder Entfernen eines Objekts aus einem Schienensystem nach der vorhergehenden Beschreibung, aufweisend die Schritte des Entfernens mindestens eines zweiten länglichen Bewegungsschienenelements aus einer Bewegungsschiene, die aus einer Aneinanderreihung erster Bewegungsschienenelemente und zweiter Bewegungsschienenelemente besteht, so dass ein freies Ende der Bewegungsschiene entsteht, des Einsetzens eines Läufers an das freie Ende und Aufschieben auf die Bewegungsschiene oder Herausschieben eines Läufers von der Bewegungsschiene über das freie Ende, und des anschließenden Einsetzens des zweiten Bewegungsschienenelements.

In einer vorteilhaften Ausführungsform ist das Objekt ein Passagiersitz.

Das genannte Verfahren ist somit auch ein Verfahren zum Vergrößern oder Verkleinern von Sitzabständen in einer Kabine eines Transportmittels, das vor den vorangehend genannten Schritten das Verschieben von auf der Bewegungsschiene angeordneten Passagiersitzen umfasst und bei Verkleinerung von Sitzabständen das Einfügen mindestens eines zusätzlichen Passagiersitzes auf die Bewegungsschiene und bei Vergrößerung von Sitzabständen das Herausnehmen mindestens eines Passagiersitzes umfasst.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt ein Schienensystem mit darauf befestigten Passagiersitzen in einer Seitenansicht.
Fig. 2 und 3 zeigen Details eines Schienensystems in dreidimensionalen Ansichten.
Fig. 4 zeigt ein Flugzeug mit einer Kabine und einem darin angeordneten Schienensystem.

### DETAILLIERTE DARSTELLUNG EXEMPLARISCHER AUSFÜHRUNGSFORMEN

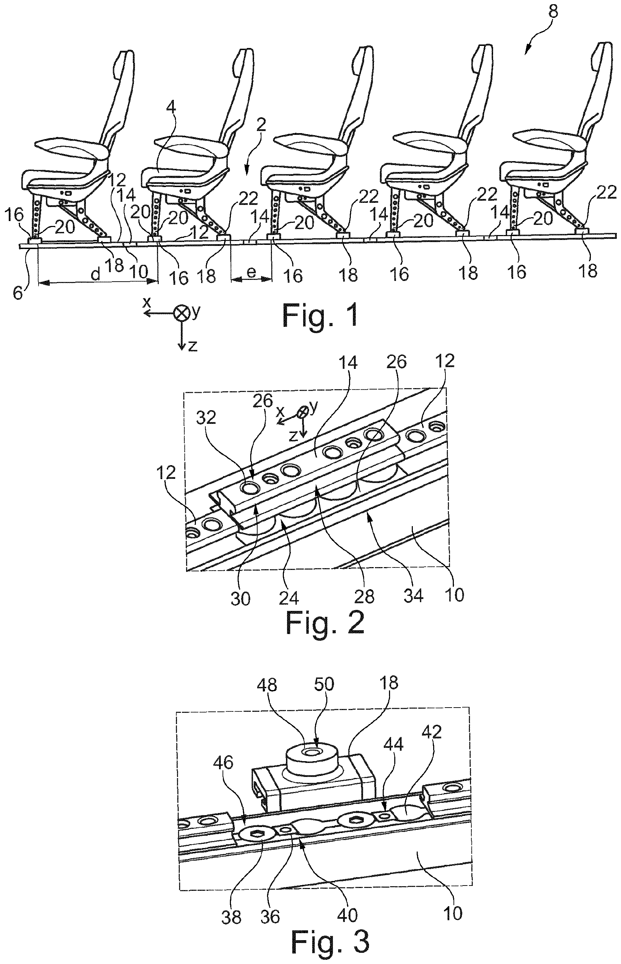

Fig. 1 zeigt ein Schienensystem 2 zum Befestigen von Objekten 4 in Form von Passagiersitzen an einem Fußboden 6 in einer Kabine 8 eines Flugzeugs. An dem Fußboden 6 ist eine Fußbodenschiene 10 angeordnet, die sich in einer Längsrichtung x der Kabine 8 erstreckt. Auf der Fußbodenschiene 10 befinden sich erste längliche Bewegungsschienenelemente 12 und zweite Bewegungsschienenelemente 14 in einer abwechselnden Aneinanderreihung, so dass nach jedem ersten Bewegungsschienenelement 12 ein zweites Bewegungsschienenelement 14 folgt, an das sich wieder ein erstes Bewegungsschienenelement 12 anschließt. Die Bewegungsschienenelemente 12 und 14 weisen eine der Längsrichtung x entsprechende Haupterstreckungsrichtung auf.

Die Passagiersitze 4 sind über gleitend gelagerte Läufer 16 und 18 mit den Bewegungsschienenelementen 12 und 14 gekoppelt. Hierzu weisen die Sitze 4 Beschläge 20 und 22 auf, welche bevorzugt eine zumindest leichte Rotation um eine y-Achse, die quer zu der x-Achse verläuft, zulassen. Die Beschläge 20 und 22 können mit dem jeweiligen Läufer 16 bzw. 18 auch eine Einheit bilden, d.h. es sind keine separat voneinander ausgeführten Komponenten.

Ziel einer solchen Anordnung aus Bewegungsschienenelementen 12 und 14 ist, selektiv einzelne zweite Bewegungsschienenelemente 14 aus dem Verbund lösen zu können, um die jeweiligen Läufer 16 und 18 von den Bewegungsschienenelementen 12 und 14 zu entfernen. Ein Austausch oder das Einsetzen eines zusätzlichen Passagiersitzes 4 wird dadurch erlaubt, ohne das Herausnehmen von anderen Passagiersitzen 4 zu erfordern.

In Fig. 2 werden zwei in einem Abstand zueinander angeordnete erste Bewegungsschienenelemente 12 gezeigt, zwischen denen ein zweites Bewegungsschienenelement 14 angeordnet ist und gerade von der Fußbodenschiene 10 entfernt oder eingesetzt wird. Das zweite Bewegungsschienenelement 14 weist ebenso wie die ersten Bewegungsschienenelemente 12 eine Basisfläche 24 auf, die auf einer Oberseite 26 der Fußbodenschiene 10 aufliegt. Zwischen der Basisfläche 24 und einer von der Fußbodenschiene 10 abgewandten Oberseite 26 befindet sich eine Hinterschneidung 28 in Form einer Einschnürung in einem Profilquerschnitt 30 der Bewegungsschienenelemente 12 oder 14 entlang der x-Achse. Die Hinterschneidung 28 dient dazu, einen an dem zweiten Bewegungsschienenelement 14 gelagerten Läufer 16 oder 18 vor einem Abheben, d.h. einer Bewegung in z-Richtung, zu hindern. Hierdurch kann ein Läufer 16 bzw. 18 lediglich entlang der x-Achse verschoben werden, wobei Kräfte in z-Richtung senkrecht zum Fußboden 6 durch das zweite Bewegungsschienenelement 14 aufgenommen werden.

Die Bewegungsschienenelemente 12 und 14 weisen Arretieröffnungen 32 auf, in die nicht dargestellte Arretiermittel eingebracht werden können, um ein Verschieben des jeweiligen Läufers 16 bzw. 18 zu verhindern. Damit werden die Objekte 4 an ihrer vorbestimmten Position gehalten.

Zum Befestigen der Bewegungsschienenelemente 12 und 14 sind Haltemittel 34 vorgesehen, welche beispielhaft ein Adapterschienenelement 36 und Arretierscheiben 38 aufweisen, wobei das Adapterschienenelement Vorsprünge 40 aufweist, die beim Einlegen des Adapterschienenelements 36 in eine Öffnungskontur 42 der Fußbodenschiene durch einen Zentralschlitz 44 zur Oberseite 46 der Fußbodenschiene 10 ragen und mit den Arretierscheiben 38 arretiert werden. Dies wird insbesondere in Fig. 3 dargestellt. Hier ist ferner ein Läufer 18 gezeigt, der eine Aufnahmebohrung 48 mit einem darin befindlichen Gewinde 50 besitzt, in das der Abschnitt 22 eines Passagiersitzes 4 einschraubbar ist.

Wie insbesondere die Fig. 1 erkennen lässt, kann die Summe der Längen eines ersten Bewegungsschienenabschnitts 12 und eines zweiten Bewegungsschienenelements 14 einem Sitzabstand d entsprechen, der beispielhaft in einem Bereich von 26 bis 34 Zoll liegt und besonders bevorzugt in einem Bereich von 31 bis 33 Zoll. Um eine einfache Herausnahme eines Läufers 16 bzw. 18 zu erlauben, sollte die Länge eines zweiten Schienenelements 14 die Länge eines Läufers 18 bzw. 16 überschreiten. Allerdings ist eine zu große Länge aufgrund eines begrenzten Abstandes e zwischen einer Hinterkante eines Sitzes und einer Vorderkante eines dahinter befindlichen Sitzes 4 unpraktisch, so dass die Länge eines zweiten Schienenelements 14 beispielhaft auf 20 cm begrenzt sein könnte.

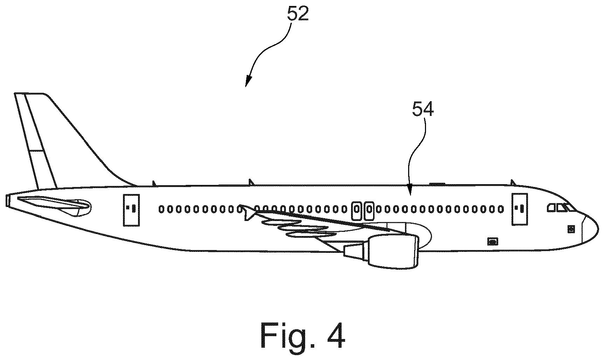

Fig. 4 zeigt schließlich ein Flugzeug 52 mit einer darin angeordneten Kabine 54, in der ein Schienensystem aus den Fig. 1 bis 3 integriert ist, auf dem eine Reihe von Passagiersitzen 4 bzw. Passagiersitzreihen installiert sind.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Schienensystem (2) zum Befestigen von Objekten an einem Fußboden in einer Kabine eines Transportmittels, aufweisend:
mindestens eine in oder an dem Fußboden integrierbare Fußbodenschiene (10),
eine Vielzahl erster länglicher Bewegungsschienenelemente (12),
eine Vielzahl zweiter länglicher Bewegungsschienenelemente (14),
eine Vielzahl von Haltemitteln (34) zum Haltern von ersten und zweiten Bewegungsschienenelementen (12, 14) an der Fußbodenschiene (10),
eine Vielzahl von auf den ersten und zweiten Bewegungsschienenelementen (12, 14) gleitend lagerbaren Läufern (16, 18),
wobei die ersten und zweiten Bewegungsschienenelemente (12, 14) senkrecht zu ihrer Haupterstreckungsrichtung (x) einen Schienenprofilquerschnitt (30) aufweisen, der mindestens eine lateral nach außen gerichtete Hinterschneidung (28) aufweist,
wobei die ersten und zweiten Bewegungsschienenelemente (12, 14) jeweils zwei einander gegenüberliegende Endflächen aufweisen, die bündig mit Endflächen anderer erster oder zweiter Bewegungsschienenelemente (12, 14) in Flächenkontakt bringbar sind, so dass mindestens eine durchgehende Bewegungsschiene mit gleichbleibendem Schienenprofilquerschnitt (30) entsteht,
wobei die Läufer (16, 18) zum gleitenden Lagern eine mit dem Schienenprofilquerschnitt (30) korrespondierend geformte Ausnehmung aufweisen und
wobei die Summe der Längen eines ersten länglichen Bewegungsschienenelements (12) und eines zweiten Bewegungsschienenelements (14) in einem Bereich von 26 Zoll (ungefähr 66 cm) bis 100 Zoll (ungefähr 254 cm) ist und die Länge eines zweiten Bewegungsschienenelements (14) die Länge eines ersten Bewegungsschienenelements (12) unterschreitet.

2. Schienensystem (2) nach Anspruch 1,
wobei die Summe der Längen eines ersten länglichen Bewegungsschienenelements (12) und eines zweiten Bewegungsschienenelements (14) in einem Bereich von 26 Zoll (ungefähr 66 cm) bis 40 Zoll (ungefähr 1 m) ist.

3. Schienensystem (2) nach Anspruch 1 oder 2,
wobei die Länge eines zweiten Bewegungsschienenelements (14) die Länge der Ausnehmung eines Läufers (16, 18) überschreitet.

4. Schienensystem (2) nach einem der vorhergehenden Ansprüche,
wobei die Länge eines zweiten Bewegungsschienenelements (14) höchstens 20 cm beträgt.

5. Schienensystem (2) nach einem der vorhergehenden Ansprüche,
wobei die Fußbodenschiene (10) eine Sitzschiene ist,
wobei das Haltemittel (34) ein Adapterschienenelement (36) aufweist, welches eine mit einer Öffnungskontur (42) der Fußbodenschiene (10) korrespondierende Form aufweist und in die Fußbodenschiene (10) einführbar und dort arretierbar ist, und
wobei die Bewegungsschienenelemente (12, 14) an dem Adapterschienenelement (36) verschraubbar sind.

6. Schienensystem (2) nach einem der vorhergehenden Ansprüche,
wobei die ersten und zweiten Bewegungsschienenelemente (12, 14) zueinander symmetrisch ausgeformte Endflächen aufweisen.

7. Schienensystem (2) nach einem der vorhergehenden Ansprüche,
wobei die ersten und zweiten Bewegungsschienenelemente (12, 14) senkrecht zu ihrer Erstreckungsrichtung (x) verlaufende, plane Endflächen aufweisen.

8. Transportmittel (52), aufweisend eine Kabine (54) mit einem Fußboden (6) und einem darin installierten Schienensystem (2) zum Befestigen von Objekten nach einem der Ansprüche 1 bis 7.

9. Transportmittel (52) nach Anspruch 8, das als Flugzeug ausgeführt ist.

10. Transportmittel (52) nach Anspruch 8 oder 9,
wobei die Objekte als Passagiersitze (4) ausgeführt sind.

11. Verfahren zum Einsetzen oder Entfernen eines Objekts aus einem Schienensystem (2) nach einem der Ansprüche 1 bis 7, aufweisend die Schritte:
- Entfernen mindestens eines zweiten länglichen Bewegungsschienenelements (14) aus einer Bewegungsschiene, die aus einer Aneinanderreihung erster Bewegungsschienenelemente (12) und zweiter Bewegungsschienenelemente (14) besteht, so dass ein freies Ende der Bewegungsschiene entsteht,
- Einsetzen eines Läufers (16, 18) an das freie Ende und Aufschieben auf die Bewegungsschiene oder Herausschieben eines Läufers (16, 18) von der Bewegungsschiene über das freie Ende, und
- anschließendes Einsetzen des zweiten Bewegungsschienenelements (14).

12. Verfahren nach Anspruch 11, wobei das Objekt ein Passagiersitz (4) ist.

## Claims

1. Rail system (2) for securing objects to a floor in a cabin of a transport means, having:
at least one floor rail (10) which can be integrated in or on the floor,
a multiplicity of first elongate movement rail elements (12),
a multiplicity of second elongate movement rail elements (14),
a multiplicity of holding means (34) for holding first and second movement rail elements (12, 14) on the floor rail (10),
a multiplicity of runners (16, 18) which can be mounted in a sliding manner on the first and second movement rail elements (12, 14),
wherein the first and second movement rail elements (12, 14) have, perpendicularly to their main direction of extent (x), a rail profile cross section (30) which has at least one laterally outwardly directed undercut (28),
wherein the first and second movement rail elements (12, 14) each have two mutually opposite end surfaces which can be brought into surface contact flush with end surfaces of other first or second movement rail elements (12, 14) such that at least one continuous movement rail having a consistent rail profile cross section (30) is produced,
wherein the runners (16, 18) have, for the sliding mounting, a recess shaped in a corresponding manner to the rail profile cross section (30), and
wherein the sum of the lengths of a first elongate movement rail element (12) and of a second movement rail element (14) is in a range of 26 inches (approximately 66 cm) to 100 inches (approximately 254 cm), and the length of a second movement rail element (14) is less than the length of a first movement rail element (12).

2. Rail system (2) according to Claim 1,
wherein the sum of the lengths of a first elongate movement rail element (12) and of a second movement rail element (14) is in a range of 26 inches (approximately 66 cm) to 40 inches (approximately 1 m).

3. Rail system (2) according to Claim 1 or 2,
wherein the length of a second movement rail element (14) exceeds the length of the recess of a runner (16, 18) .

4. Rail system (2) according to one of the preceding claims,
wherein the length of a second movement rail element (14) is at most 20 cm.

5. Rail system (2) according to one of the preceding claims,
wherein the floor rail (10) is a seat rail,
wherein the holding means (34) has an adapter rail element (36) which has a shape corresponding to an opening contour (42) of the floor rail (10) and is insertable into the floor rail (10) and is lockable there, and
wherein the movement rail elements (12, 14) are screwable to the adapter rail element (36).

6. Rail system (2) according to one of the preceding claims,
wherein the first and second movement rail elements (12, 14) have end surfaces formed symmetrically with respect to one another.

7. Rail system (2) according to one of the preceding claims,
wherein the first and second movement rail elements (12, 14) have flat end surfaces running perpendicularly to their direction of extent (x).

8. Transport means (52) having a cabin (54) with a floor (6) and with a rail system (2), which is installed therein, for securing objects according to one of Claims 1 to 7.

9. Transport means (52) according to Claim 8, which is in the form of an aircraft.

10. Transport means (52) according to Claim 8 or 9,
wherein the objects are in the form of passenger seats (4).

11. Method for inserting or removing an object into/from a rail system (2) according to one of Claims 1 to 7, having the steps of:
- removing at least one second elongate movement rail element (14) from a movement rail, which consists of first movement rail elements (12) and second movement rail elements (14) arranged in a row next to one another, such that a free end of the movement rail is produced,
- inserting a runner (16, 18) onto the free end and pushing same onto the movement rail or pushing a runner (16, 18) out of the movement rail via the free end, and
- subsequently inserting the second movement rail element (14).

12. Method according to Claim 11, wherein the object is a passenger seat (4).

## Revendications

1. Système de rails (2) servant à la fixation d'objets à un plancher dans une cabine d'un moyen de transport, comprenant :
au moins un rail de plancher (10) pouvant être intégré dans ou sur le plancher,
une pluralité de premiers éléments de rail de déplacement (12) allongés,
une pluralité de deuxièmes éléments de rail de déplacement (14) allongés,
une pluralité de moyens de retenue (34) servant à la retenue de premiers et deuxièmes éléments de rail de déplacement (12, 14) sur le rail de plancher (10),
une pluralité de patins (16, 18) pouvant être montés à coulissement sur les premiers et deuxièmes éléments de rail de déplacement (12, 14),
les premiers et deuxièmes éléments de rail de déplacement (12, 14) présentant, perpendiculairement à leur direction d'étendue principale (x), une section transversale de profilé de rail (30) qui comprend au moins une contre-dépouille (28) orientée latéralement vers l'extérieur,
les premiers et deuxièmes éléments de rail de déplacement (12, 14) comprenant respectivement deux surfaces d'extrémité opposées l'une à l'autre qui peuvent être amenées en contact de surface en affleurement avec des surfaces d'extrémité d'autres premiers ou deuxièmes éléments de rail de déplacement (12, 14), de sorte qu'au moins un rail de déplacement continu à section transversale de profilé de rail (30) constante soit produit,
les patins (16, 18) comprenant un évidement formé de manière à correspondre à la section transversale de profilé de rail (30) pour le montage à coulissement et la somme des longueurs d'un premier élément de rail de déplacement (12) allongé et d'un deuxième élément de rail de déplacement (14) étant comprise dans une plage de 26 pouces (approximativement 66 cm) à 100 pouces (approximativement 254 cm) et la longueur d'un deuxième élément de rail de déplacement (14) étant inférieure à la longueur d'un premier élément de rail de déplacement (12) .

2. Système de rails (2) selon la revendication 1,
la somme des longueurs d'un premier élément de rail de déplacement (12) allongé et d'un deuxième élément de rail de déplacement (14) étant comprise dans une plage de 26 pouces (approximativement 66 cm) à 40 pouces (approximativement 1 m).

3. Système de rails (2) selon la revendication 1 ou 2, la longueur d'un deuxième élément de rail de déplacement (14) étant supérieure à la longueur de l'évidement d'un patin (16, 18).

4. Système de rails (2) selon l'une des revendications précédentes,
la longueur d'un deuxième élément de rail de déplacement (14) valant au maximum 20 cm.

5. Système de rails (2) selon l'une des revendications précédentes,
le rail de plancher (10) étant un rail de siège,
le moyen de retenue (34) comprenant un élément de rail adaptateur (36), lequel présente une forme correspondant à un contour d'ouverture (42) du rail de plancher (10) et peut être inséré dans le rail de plancher (10) et peut y être bloqué, et
les éléments de rail de déplacement (12, 14) pouvant être vissés sur l'élément de rail adaptateur (36).

6. Système de rails (2) selon l'une des revendications précédentes,
les premiers et deuxièmes éléments de rail de déplacement (12, 14) comprenant des surfaces d'extrémité formées de manière symétrique les unes par rapport aux autres.

7. Système de rails (2) selon l'une des revendications précédentes,
les premiers et deuxièmes éléments de rail de déplacement (12, 14) comprenant des surfaces d'extrémité planes s'étendant perpendiculairement à leur direction d'étendue (x).

8. Moyen de transport (52), comprenant une cabine (54) dotée d'un plancher (6) et d'un système de rails (2) installé dans celle-ci pour la fixation d'objets selon l'une des revendications 1 à 7.

9. Moyen de transport (52) selon la revendication 8, lequel est réalisé sous forme d'aéronef.

10. Moyen de transport (52) selon la revendication 8 ou 9,
les objets étant réalisés sous forme de sièges de passagers (4).

11. Procédé permettant d'insérer un objet dans un système de rails (2) selon l'une des revendications 1 à 7, ou de l'en retirer, comprenant les étapes suivantes :
- retrait d'au moins un deuxième élément de rail de déplacement (14) allongé d'un rail de déplacement qui est produit par juxtaposition de premiers éléments de rail de déplacement (12) et de deuxièmes éléments de rail de déplacement (14), de sorte qu'une extrémité libre du rail de déplacement soit produite,
- insertion d'un patin (16, 18) au niveau de l'extrémité libre et glissement sur le rail de déplacement ou glissement d'un patin (16, 18) hors du rail de déplacement via l'extrémité libre, et
- insertion subséquente du deuxième élément de rail de déplacement (14).

12. Procédé selon la revendication 11, l'objet étant un siège de passager (4).
